# FASCICULE DE BREVET EUROPEEN

(11) **EP 2 350 363 B1**
(45) Date de publication et mention de la délivrance du brevet: **13.11.2019**
(21) Numéro de dépôt: 09795478.8
(22) Date de dépôt: 20.11.2009
(51) Int. Cl.: D03D 25/00

(54) **REALISATION D'UNE STRUCTURE FIBREUSE A EPAISSEUR EVOLUTIVE PAR TISSAGE 3D**
HERSTELLUNG EINES FASERGEBILDES VARIIERBARER DICKE DURCH 3D-WEBEN
PRODUCTION OF A FIBROUS STRUCTURE WITH VARIABLE THICKNESS BY 3D WEAVING

(30) Priorité: 28.11.2008 FR 0858102
(43) Date de publication de la demande: 03.08.2011
(73) Titulaire: Safran Ceramics, 33185 Le Haillan (FR)
(72) Inventeur: COUPE, Dominique, F-33160 Le Haillan (FR); BOUILLON, Eric, F-33185 Le Haillan (FR); DAMBRINE, Bruno, F-77820 Le Chatelet En Brie (FR)
(74) Mandataire: Delumeau, François Guy
(86) Numéro de dépôt international: PCT/FR2009/052236
(87) Numéro de publication internationale: WO 2010/061101

(56) Documents cités:
- EP-A- 0 391 745
- US-A- 898 941
- US-A- 2 164 848
- US-A- 4 922 968
- US-A- 4 958 663
- US-A1- 2003 056 847
- US-B1- 6 283 168

## Description

### Arrière-plan de l'invention

L'invention concerne la réalisation d'une structure fibreuse à épaisseur évolutive par tissage tridimensionnel (3D).

Par tissage 3D on entend ici un tissage multicouches utilisant plusieurs couches de fils de trame et plusieurs couches de fils de chaîne, avec des fils de chaîne qui lient entre eux des fils de trame de différentes couches. Différents types d'armures de tissage 3D peuvent être utilisées, par exemple des armures interlock, multi-satin, multi-toile, multi-sergé. On pourra se référer notamment au document WO 2006/136755.

Un domaine d'application de l'invention est la réalisation de structures tissées 3D à partir desquelles des préformes fibreuses destinées à la réalisation de pièces en matériau composite peuvent être obtenues.

Un processus habituel pour la réalisation de pièce en matériau composite comprend la formation d'une préforme fibreuse destinée à constituer le renfort fibreux de la pièce et ayant une forme voisine de celle de la pièce, et la densification de la préforme fibreuse par une matrice. La matrice peut être une résine ou, dans le cas d'un matériau composite dit thermostructural, un matériau réfractaire tel que carbone ou céramique.

De façon bien connue, une matrice résine peut être obtenue par imprégnation ou RTM ("Resin Transfer Moulding") tandis qu'une matrice carbone ou céramique peut être obtenue par voie liquide (imprégnation par une résine précurseur de carbone ou céramique et transformation du précurseur par pyrolyse) ou par voie gazeuse (infiltration chimique en phase gazeuse ou "CVI" pour "Chemical Vapor Infiltration").

Parmi les différentes techniques connues pour la réalisation de structures fibreuses destinées, après mise en forme éventuelle, à constituer une préforme fibreuse pour une pièce en matériau composite, le tissage 3D est avantageux en ce qu'il permet d'obtenir en une seule opération une structure fibreuse multicouches épaisse présentant une bonne cohésion.

Toutefois, une difficulté survient lorsque la préforme à réaliser a une forme particulière difficile, voire impossible, à obtenir directement par tissage 3D classique, notamment lorsqu'elle doit présenter une variation importante d'épaisseur en direction perpendiculaire aux directions chaîne et trame.

Une solution peut consister à réaliser une structure fibreuse tissée 3D présentant l'épaisseur maximale de la préforme et à obtenir celle-ci par découpe dans la structure fibreuse. Toutefois, outre les chutes de matière que cela entraîne, une telle solution présente l'inconvénient de devoir couper des fils avec le risque d'amoindrir la tenue mécanique de la préforme.

Une autre solution peut consister à augmenter localement le titre (donc la section transversale) et/ou la contexture des fils de trame ou de chaîne afin de réduire la capacité de diminution d'épaisseur lors d'une mise en forme de la structure fibreuse 3D avec compression. Toutefois, cette solution ne peut avoir que des effets limités. En particulier, le titre ne peut être augmenté au-delà d'une limite à partir de laquelle le tissage devient très difficile voire impossible.

Des procédés de tissage multicouches notamment pour réaliser des préformes fibreuse de forme complexe et/ou d'épaisseur variable sont décrits dans les documents US 4 922 968, EP 0391745, US 2003/056847, US 898941, US 4 958 663, US 2164848 et US 6283168.

### Objet et résumé de l'invention

L'invention vise à proposer un procédé de réalisation d'une structure fibreuse 3D à épaisseur évolutive ne présentant pas les inconvénients précités.

Selon un premier mode de mise en œuvre de l'invention, ce but est atteint par un procédé de réalisation d'une structure fibreuse par tissage tridimensionnel multicouches, la structure fibreuse ayant une épaisseur, dans une direction perpendiculaire aux directions chaîne et trame, qui évolue le long de la direction chaîne tout en conservant un même nombre de fils de chaîne tissés à tout niveau de la structure fibreuse le long de la direction chaîne,
procédé dans lequel, selon un premier aspect, lors d'une transition en direction chaîne d'une première partie de la texture fibreuse à une deuxième partie de la texture fibreuse ayant une épaisseur plus grande que celle de la première partie, on diminue le nombre de plans de chaîne et on augmente le nombre de couches de fils de chaîne sans changer le nombre de fils de chaîne, en constituant au moins un plan de chaîne dans la deuxième partie avec des fils de chaîne issus d'au moins deux plans de chaîne différents dans la première partie, lesdits au moins deux plans de chaîne différents étant situés l'un dernière l'autre en direction trame.

De façon similaire, selon un deuxième aspect de ce premier mode de mise en œuvre, lors d'une transition en direction chaîne d'une deuxième partie de la texture fibreuse à une première partie de la texture fibreuse ayant une épaisseur plus petite que celle de la deuxième partie, on augmente le nombre de plans de chaîne et on diminue le nombre de couches de fils de chaîne sans changer le nombre de fils de chaîne, en répartissant les fils de chaîne d'au moins un plan de chaîne de la deuxième partie entre des plans de chaîne différents de la première partie.

Ainsi, l'invention est remarquable en ce qu'en regroupant partiellement ou totalement des plans de chaîne ou en divisant partiellement ou totalement des plans de chaîne on peut augmenter ou diminuer l'épaisseur par addition ou soustraction de couches de fils de chaîne sans changer le nombre de fils de chaîne qui sont tissés sur toute leur longueur. Dans la deuxième partie d'épaisseur plus grande, il suffit alors d'ajouter des fils de trame.

Avantageusement, pour atténuer l'effet sur la densité de la structure fibreuse de la variation du nombre de plans de chaîne, il est possible, pour le tissage de la deuxième partie, d'utiliser des fils de trame dont au moins une partie a un titre et/ou une contexture supérieurs à ceux des fils de trame utilisés pour le tissage dans la première partie. On peut alors réaliser une transition entre lesdites deux parties de la structure fibreuse en faisant varier progressivement le titre global des fils de trame dans des plans de trame successifs.

Selon un exemple de réalisation, un plan de chaîne de la deuxième partie comprend l'ensemble des fils de chaîne de deux plans de chaîne voisins de la première partie.

Selon un autre exemple de réalisation, deux plans de chaîne voisins de la deuxième partie comprennent des fils de chaîne de trois plans de chaîne voisins de la première partie.

L'invention permet aussi de gérer une variation d'épaisseur en direction trame de façon semblable à ce qui est indiqué ci-avant pour une variation d'épaisseur en sens chaîne.

Ainsi, selon un autre mode de mise en œuvre de l'invention, il est proposé un procédé de réalisation d'une structure fibreuse par tissage tridimensionnel multicouches, la structure fibreuse ayant une épaisseur, dans une direction perpendiculaire aux directions chaîne et trame, qui évolue le long de la direction trame tout en conservant un même nombre de fils de trame tissés à tout niveau de la structure fibreuse le long de la direction trame,
procédé dans lequel, selon un premier aspect, lors d'une transition en direction trame d'une première partie de la texture fibreuse à une deuxième partie de la texture fibreuse ayant une épaisseur plus grande que celle de la première partie, on diminue le nombre de plans de trame et on augmente le nombre de couches de fils de trame sans changer le nombre de fils de trame, en constituant au moins un plan de trame de la deuxième partie avec des fils de trame issus d'au moins deux plans de trame différents de la première partie, lesdits au moins deux plans de trame différents étant situés l'un dernière l'autre en direction trame.

De façon similaire, selon un deuxième aspect de ce deuxième mode de mise en œuvre, lors d'une transition en direction trame d'une deuxième partie de la texture fibreuse à une première partie de la texture fibreuse ayant une épaisseur plus petite que celle de la deuxième partie, on augmente le nombre de plans de trame et on diminue le nombre de couches de fils de trame sans changer le nombre de fils de trame, en répartissant les fils de trame d'au moins un plan de trame de la deuxième partie entre des plans de trame différents de la première partie.

Dans l'un et l'autre cas, pour le tissage de la deuxième partie, on peut utiliser des fils de chaîne dont au moins une partie a un titre et/ou une contexture supérieurs à ceux des fils de chaîne utilisés pour le tissage dans la première partie. On peut alors réaliser une transition entre lesdites deux parties de la structure fibreuse en faisant varier progressivement le titre global des fils de chaîne dans des plans de chaîne successifs.

Selon un exemple de réalisation, un plan de trame de la deuxième partie comprend l'ensemble des fils de trame de deux plans de trame voisins de la première partie.

Selon un autre exemple de réalisation, deux plans de trame voisins de la deuxième partie comprennent des fils de trame de trois plans de trame voisins de la première partie.

### Brève description des dessins

L'invention sera mieux comprise à la lecture de la description faite ci-après, à titre indicatif mais non limitatif, en référence aux dessins annexés sur lesquels :
- la figure 1 est une vue très schématique en perspective d'une structure fibreuse tissée 3D à épaisseur évolutive susceptible d'être réalisée par un procédé selon l'invention ;
- la figure 2 montre très schématiquement une correspondance entre plans de chaîne d'une première partie d'une structure fibreuse semblable à celle de la figure 1 et plans de chaîne d'une deuxième partie de la structure fibreuse d'épaisseur supérieure à celle de la première partie, selon un premier mode de réalisation ;
- les figures 3A à 3J montrent différents plans successifs d'un premier exemple d'armure de tissage d'une structure fibreuse selon le mode de réalisation de la figure 2 ;
- les figures 4A à 4J montrent différents plans successifs d'un deuxième exemple d'armure de tissage d'une structure fibreuse selon le mode de réalisation de la figure 2 ;
- la figure 5 montre très schématiquement une correspondance entre plans de chaîne d'une première partie d'une structure fibreuse semblable à celle de la figure 1 et plans de chaîne d'une deuxième partie de la structure fibreuse d'épaisseur supérieure à celle de la première partie, selon un deuxième mode de réalisation ;
- les figures 6A à 6J montrent différents plans successifs d'un exemple d'armure de tissage d'une structure fibreuse selon le mode de réalisation de la figure 5;
- la figure 7 montre une variante de constitution de trame permettant une transition progressive entre une première partie de structure fibreuse et une deuxième partie d'épaisseur plus grande ; et
- la figure 8 est une vue très schématique en perspective d'une autre structure fibreuse tissée 3D à épaisseur évolutive susceptible d'être réalisée par un procédé selon l'invention.

### Description détaillée de modes de réalisation

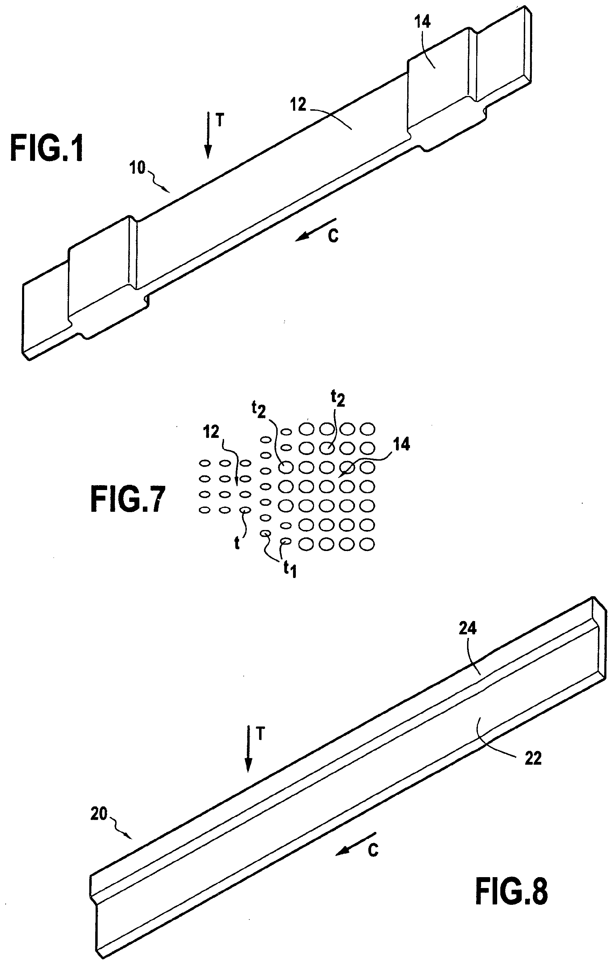

La figure 1 montre très schématiquement une structure fibreuse 10 susceptible d'être obtenue par tissage 3D par un procédé selon l'invention, seule l'enveloppe de la structure fibreuse étant montrée.

La structure fibreuse 10 est tissée sous forme d'une bande continue en direction chaîne C. L'épaisseur de la structure fibreuse dans une direction perpendiculaire aux directions chaîne C et trame T est variable, ou évolutive. Ainsi, la structure fibreuse comprend des premières parties 12 ayant une première épaisseur et des deuxièmes parties 14 ayant une deuxième épaisseur supérieure à la première.

La structure fibreuse 10 peut par exemple former une succession d'ébauches fibreuses qui sont découpées pour, après mise en forme, constituer des préformes fibreuses pour des aubes présentant une partie de pied plus épaisse correspondant à une partie 14 et une partie de pale correspondant à une partie 12. Bien entendu, l'invention est applicable au tissage 3D de structure fibreuse ayant une épaisseur évolutive quelle que soit sa destination.

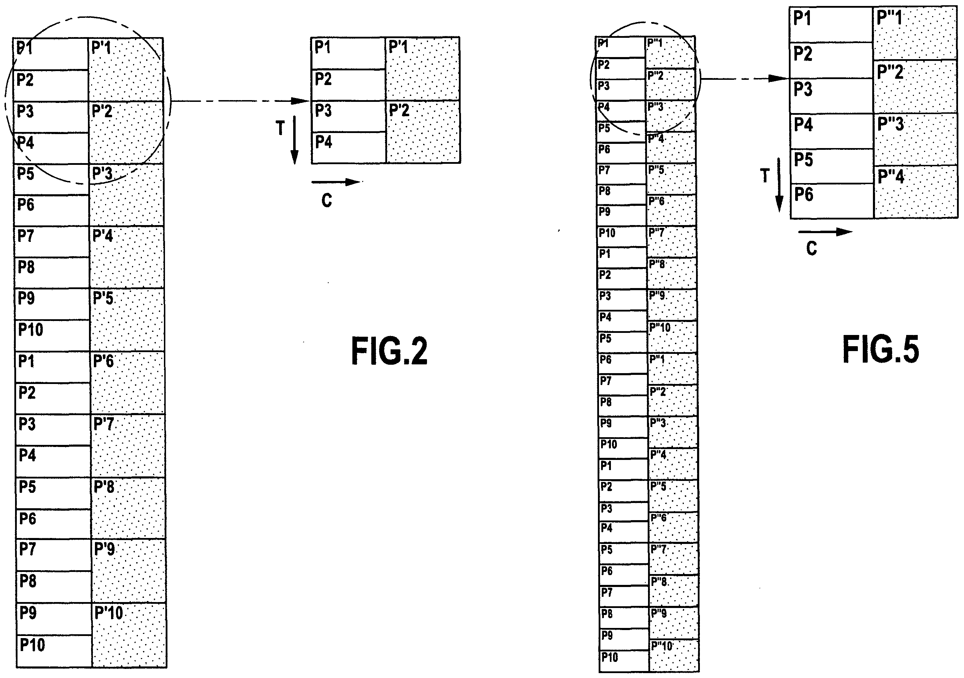

La figure 2 est un schéma de principe montrant comment, par une diminution du nombre de plans de chaîne et une augmentation correspondante du nombre de couches de fils de chaîne, on peut passer d'une première partie 12 à une deuxième partie 14 de la structure fibreuse, selon un premier mode de réalisation.

Dans l'exemple de la figure 2, le nombre de plans de chaîne dans la partie 12 est égal à 20, constitués par deux mêmes ensembles de 10 plans P1 à P10 se succédant en direction trame, chacun des plans P1 à P10 comprenant un même nombre de couches de fils de chaîne liant des fils de trame formant un nombre donné de couches de fils de trame.

Le nombre de plans de chaîne dans la partie 14 est égal à 10 constitués par un ensemble de plans P'1 à P'10. Chacun des plans P'1 à P'10 est formé par la réunion des fils de chaîne de deux plans successifs de la partie 12. Ainsi, le plan P'1 est formé par la réunion des fils de chaîne des plans P1 et P2 du premier ensemble de plans P1 à P10, le plan P'2 est formé par la réunion des fils de chaîne des plans P3 et P4 du premier ensemble de plans P1 à P10, et ainsi de suite jusqu'au plan P'10 formé par la réunion des fils de chaîne des plans P9 et P10 du deuxième ensemble de plans P1 à P10. De la sorte, le nombre de plans de chaîne est divisé par deux tandis que le nombre de couches de fils de chaîne est doublé. Le tissage nécessite alors un nombre accru de couches de fils de trame.

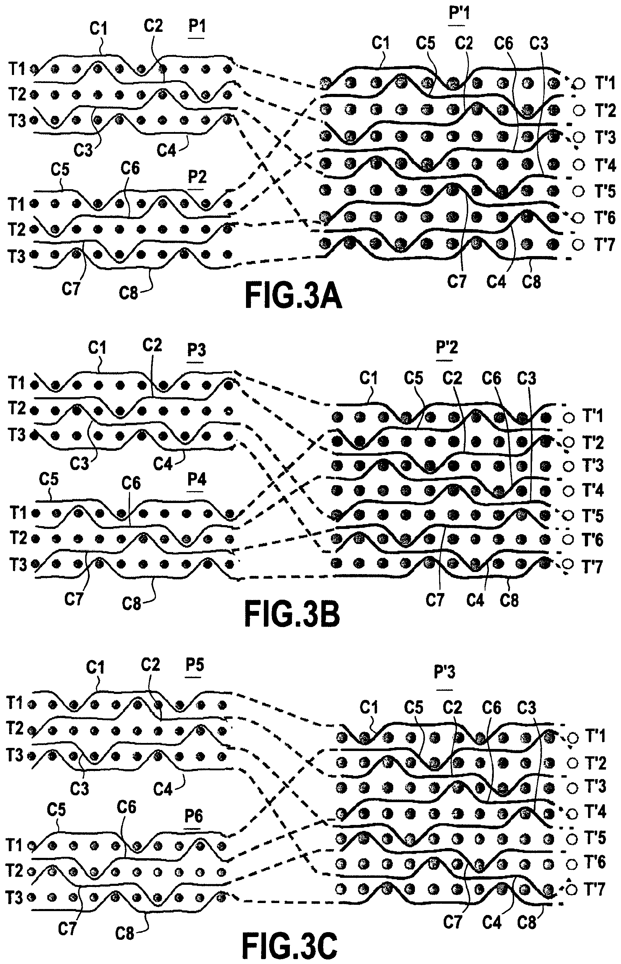

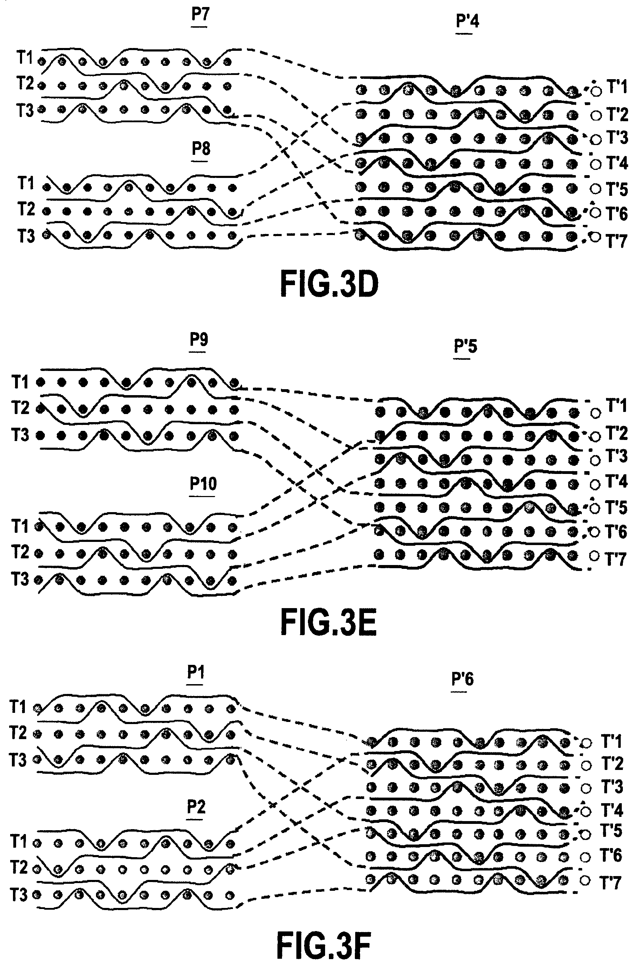

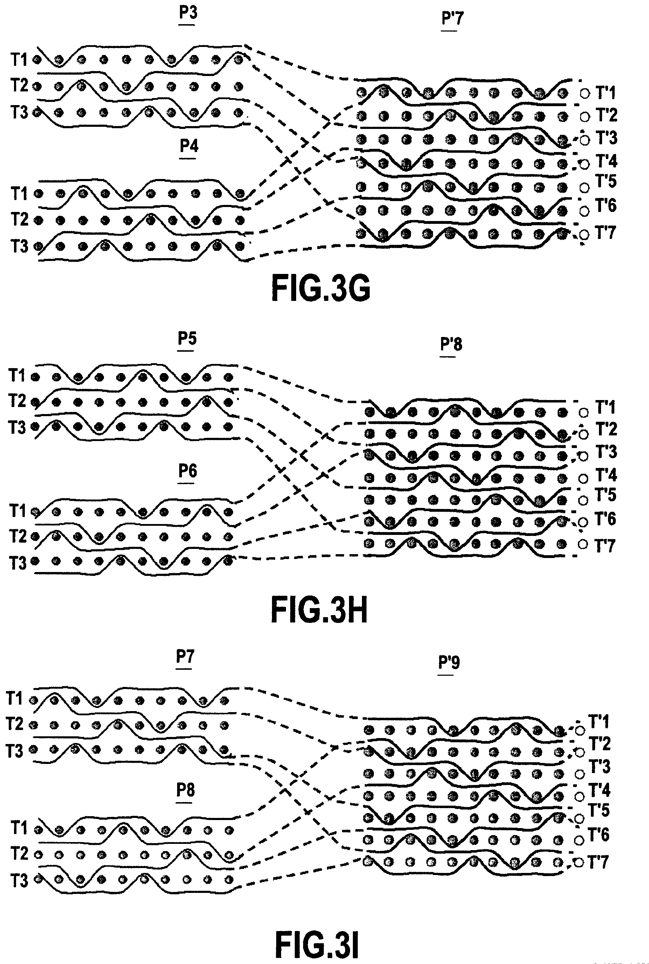

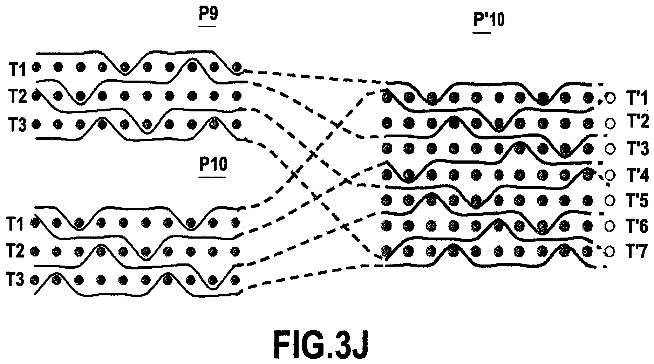

Les figures 3A à 3J montrent tous les plans de chaîne successifs dans la zone de transition entre une partie 12 et une partie 14 de la structure fibreuse selon un premier exemple d'armure de tissage. Les tirets montrent les continuités des fils de chaîne entre deux plans de la partie 12 et un plan de la partie 14.

Dans les plans P1 à P10, le nombre de couches de fils de chaîne est dans cet exemple égal à 4 et le nombre de couches de fils de trame est égal à 3 (couches T1, T2, T3). L'armure de tissage est de type satin. Ainsi, dans un plan P1, un tissage satin bidimensionnel (2D) est réalisé avec des fils de chaîne C1 et C4 dans les couches de trame externes T1 et T3, le pas de satin étant égal à 5 (1 fil de trame sur 5 "saisi" par fil de chaîne), tandis qu'un tissage multi-satin est réalisé par un fil de chaîne C2 liant des fils de trame des couches T1 et T2 et un fil de chaîne C3 liant des fils de trame de couches T2 et T3. Par tissage multi-satin on entend un mode de tissage selon lequel un fil de chaîne "saisit" alternativement 1 fil sur n d'une couche de fils de trame et 1 fil sur n d'une couche adjacente de fils de trame, n étant un entier supérieur ou égal à 3. Dans l'exemple illustré, n est égal à 10, ce qui donne un pas de satin moyen égal à 5 (10:2). De façon similaire, dans un plan P2, un tissage satin 2D est réalisé avec des fils de chaîne C5 et C8 dans les couches externes T1 et T3 et un tissage multi-satin est réalisé par un fil de chaîne C6 liant des fils de trame des couches T1 et T2 et un fil de chaîne C7 liant des fils de trame des couches T2 et T3.

Dans les plans P'1 à P'10, le nombre de couches de fils de chaîne est dans cet exemple égal à 8 et le nombre de couches de fils de trame est égal à 7 (couches T'1 à T7). L'armure de tissage est de type satin. Ainsi, dans le plan P'1 (figure 3A), un tissage satin 2D est réalisé avec les fils de chaîne C1 et C8 dans les couches de trame externes T'1 et T7 tandis qu'un tissage multi-satin est réalisé par les fils de chaîne C5, C2, C6, C3, C7, C4 liant des fils de trame des couches respectivement T1 et T2, T2 et T3, T3 et T4, T4 et T5, T5 et T6 et T6 et T7.

On notera que le tissage satin 2D dans les couches de trame externes permet d'avoir un aspect de surface relativement lisse.

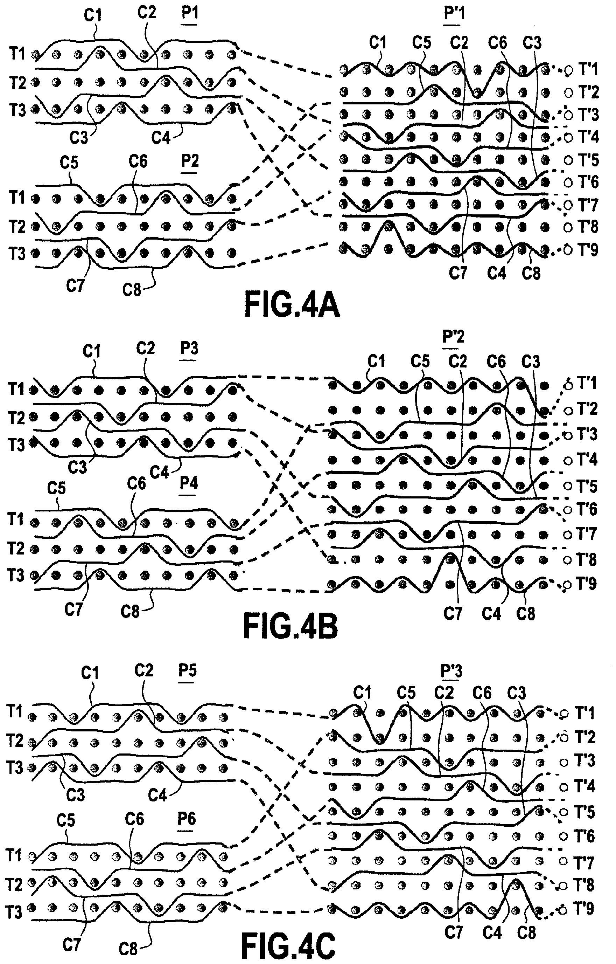

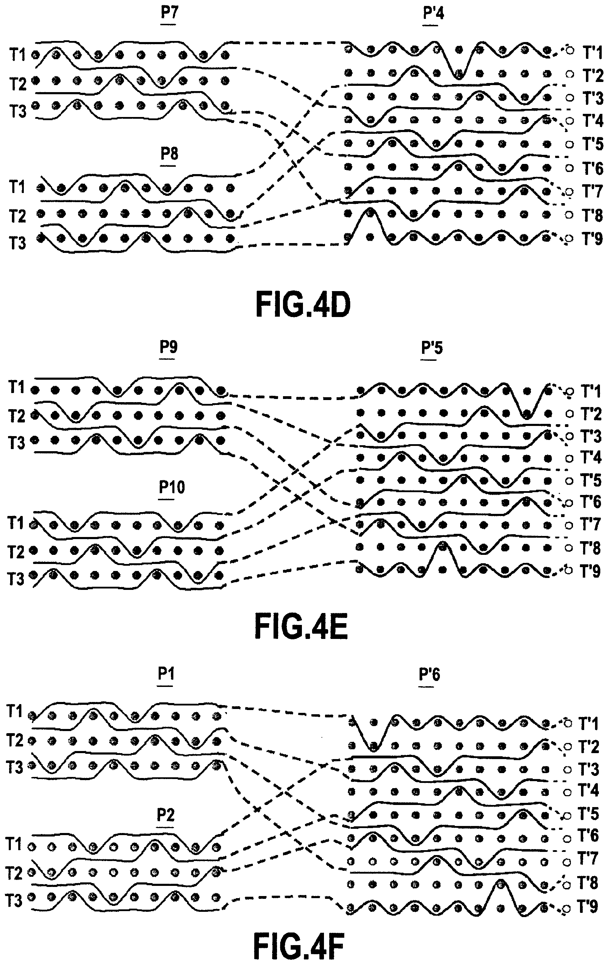

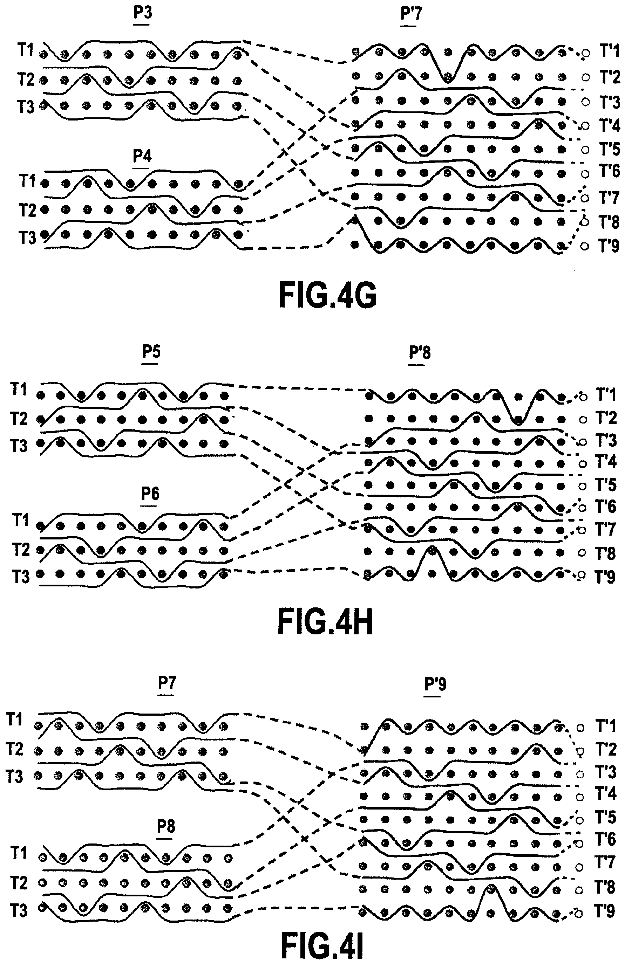

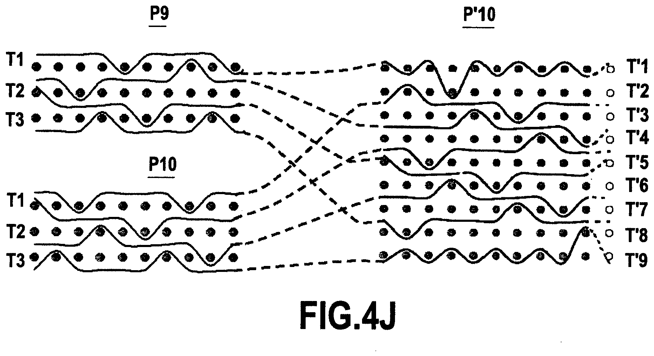

Les figures 4A à 4J montrent tous les plans de chaîne successifs dans la zone de transition entre une partie 12 et une partie 14 de la structure fibreuse selon un deuxième exemple d'armure de tissage.

Les plans P1 à P10 sont identiques aux plans P1 à P10 de l'exemple des figures 3A à 3J, le tissage étant réalisé avec la même armure de type satin.

Par contre, dans les plans P'1 à P'10, si le nombre de couches de fils de chaîne est toujours égal à huit, celui de couches de fils de trame est égal à 9 (couches T1 à T9). Dans le plan P'1 (figure 4A), dans les couches externes de fils de trame T1 et T9, le tissage est réalisé avec les fils de chaîne C1 et C8 selon une armure de type toile mais en dérivant le fil de chaîne C1, C8 pour "saisir" un fil sur 10 de la couche de fils de trame adjacente T2, T8 de manière à réaliser une liaison entre les couches T1 et T2 et entre les couches T8 et T9. Dans le reste de la texture fibreuse, un tissage multi-satin est réalisé avec les fils de chaîne C5, C2, C6, C3, C7, C4 liant des fils de trame des couches respectivement T2 et T3, T3 et T4, T4 et T5, T'5 et T6, T6 et T7 et T7 et T8. Le pas moyen du tissage multi-satin est égal à 5, chaque fil de chaîne "saisissant" alternativement un fil sur 10 d'une couche de fils de trame et un fil sur 10 d'une couche voisine. Le motif de tissage est similaire dans les plans suivants P'2 à P'10.

En comparaison avec un tissage de type satin dans les couches externes de la structure fibreuse, un tissage avec une armure de type toile offre pour la densification un accès plus aisé au cœur de préforme réalisée à partir de la structure fibreuse, dans la ou les parties les plus épaisses. En outre, une armure de type toile dans les couches externes apporte une meilleure tenue en sens chaîne et trame lors de manipulations de la structure fibreuse et lors de sa déformation pour obtenir une préforme de forme désirée.

Dans le mode de réalisation des figures 2, 3A à 3J et 4A à 4J, une augmentation d'épaisseur est obtenue en divisant par 2 le nombre de plans de chaîne (donc en multipliant par 2 le nombre de couches de fils de chaîne).

Selon particulièrement l'amplitude de l'augmentation d'épaisseur à réaliser, on pourra adopter un rapport entre nombre de plans de chaîne dans la partie la moins épaisse et nombre de plans de chaîne dans la partie la plus épaisse différent de ½ (le rapport entre nombre de couches de fils de chaîne étant inverse). D'une façon générale, à partir de N plans de chaîne comprenant chacun k couches de fils de chaîne dans la partie la moins épaisse (N et k étant des nombres entiers), on pourra former n plans de chaîne comprenant chacun K couches de fils de chaîne (n et K étant des nombres entiers avec N x k = n x K et N > n).

Ainsi, la figure 5 est un schéma de principe montrant comment, à partir de 3 plans de chaîne dans une première partie 12 de la structure fibreuse 10 on peut former 2 plans de chaîne dans une deuxième partie plus épaisse 14 avec augmentation de 50 % du nombre de couches de fils de chaîne.

Dans l'exemple de la figure 5, le nombre de plans de chaîne dans la partie 12 est égal à 30 constitués par trois mêmes ensembles de 10 plans P1 à P10 se succédant en direction trame, chacun des plans P1 à P10 comprenant un même nombre de couches de fils de chaîne liant des fils de trame formant un nombre donné de couches de fils de trame.

Le nombre de plans de chaîne dans la partie 14 est égal à 20 constitués par deux mêmes ensembles de 10 plans P"1 à P"10. Deux plans consécutifs dans les ensembles P"1 à P"10 sont formés par les fils de chaîne provenant de 3 plans consécutifs dans les ensembles P1 à P10. Ainsi, un plan P"1 est formé par la réunion de fils de chaîne provenant de plans consécutifs P1, P2 et P3 et le plan consécutif P"2 est formé par la réunion des fils de chaîne restants des plans P1, P2 et P3 et ainsi de suite.

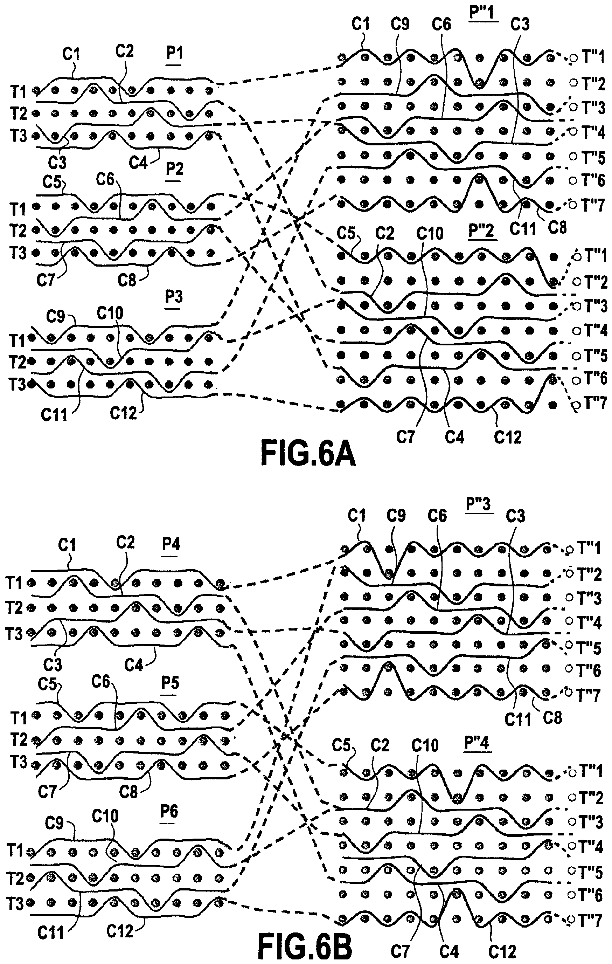

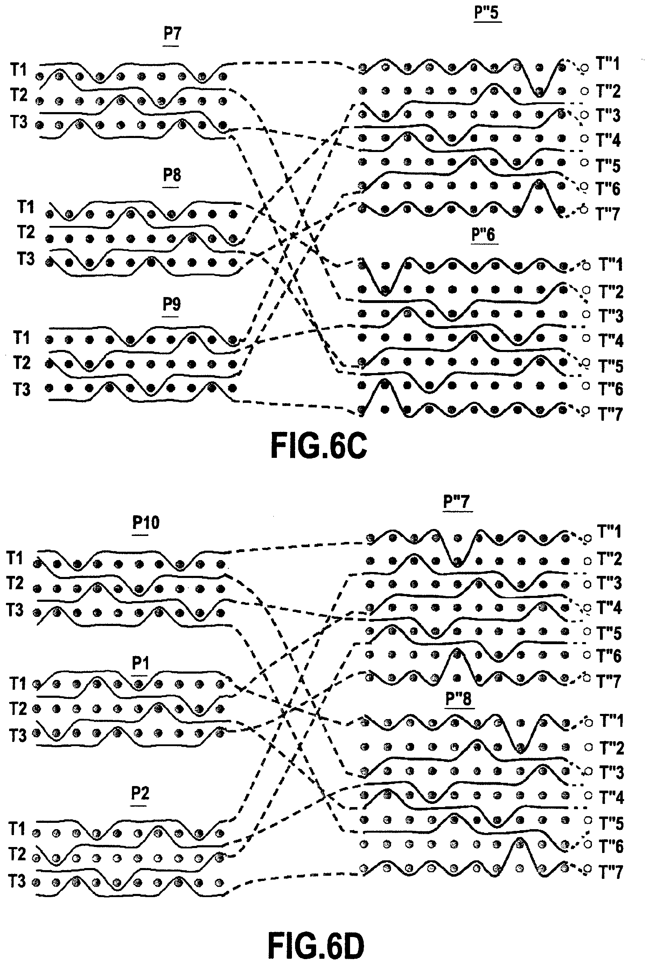

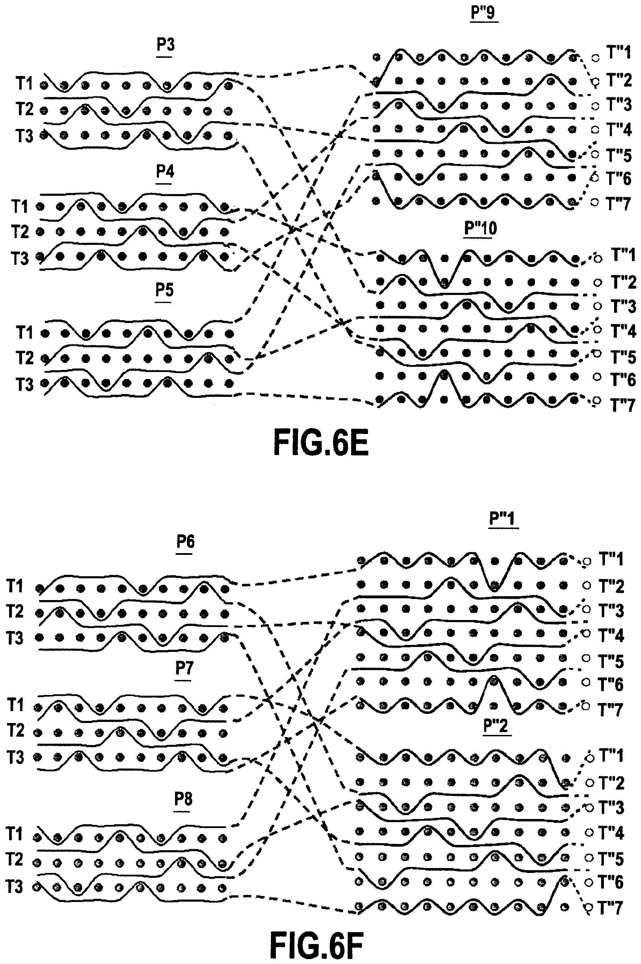

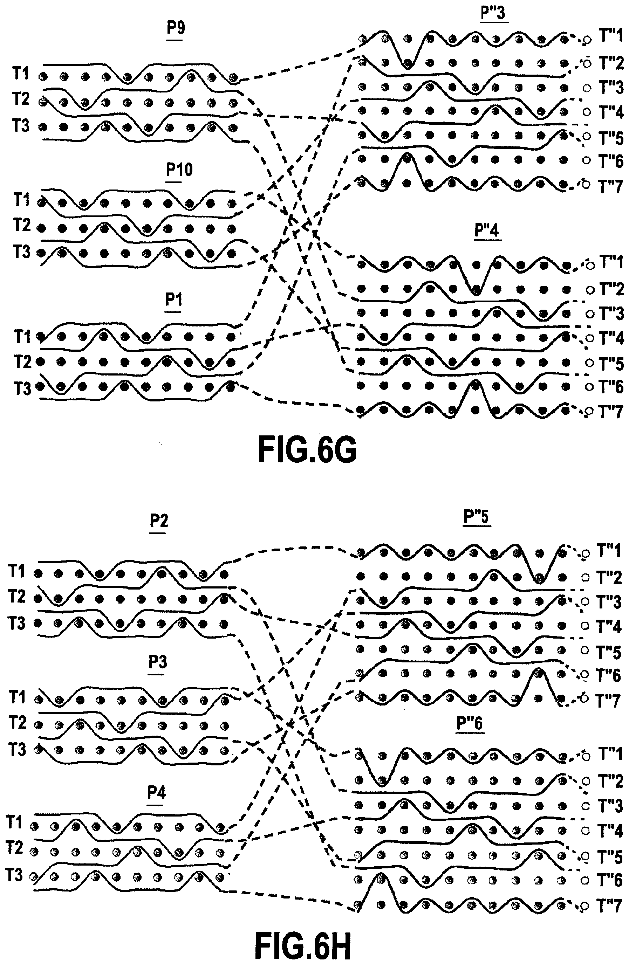

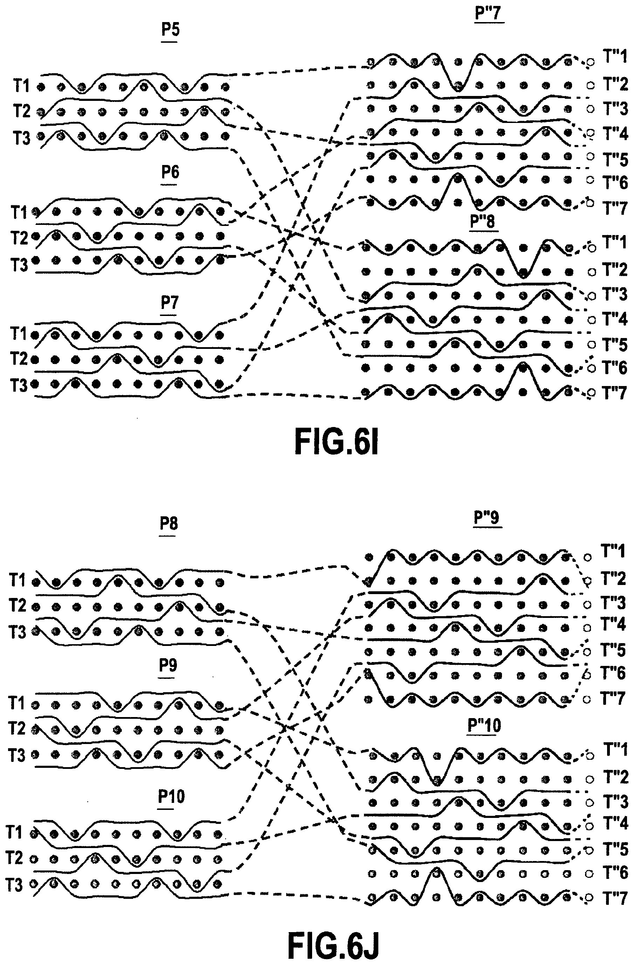

Les figures 6A à 6J montrent un exemple de tous les plans de chaîne successifs dans la zone de transition entre parties 12 et 14 selon l'exemple de la figure 5 pour une armure de tissage semblable à celle de l'exemple des figures 4A à 4J.

Les plans P1 à P10 sont identiques aux plans P1 à P10 de l'exemple des figures 3A à 3J, avec 4 couches de fils de chaîne et une armure de type satin.

Dans les plans P"1 à P"10, le nombre de couches de fils de chaîne est égal à 6 tandis que le nombre de couches de fils de trame est égal à 7 (couches T"1 à T"7).

Dans un plan P"1, dans les couches externes de fils de trame T"1 et T"7, le tissage est réalisé avec les fils de chaîne C1 (provenant du plan P1) et C8 (provenant du plan P2) selon une armure de type toile mais en dérivant le fil de chaîne C1, C8 pour "saisir" un fil sur 10 de la couche de fils de trame adjacente T"2, T"6 de manière à réaliser une liaison entre les couches T"1 et T"2 et entre les couches T"6 et T"7. Dans le reste du plan P"1, l'armure du tissage est de type multi-satin de pas moyen égal à 5 avec le fil de chaîne C9 (provenant du plan P3) liant des fils de trame des couches T"2 et T"3, le fil de chaîne C6 (provenant du plan P2) liant des fils de trame des couches T"3 et T"4, le fil de chaîne C3 (provenant du plan P1) liant des fils de trame des couches T"4 et T"5 et le fil de chaîne C11 (provenant du plan P1) liant des fils de trame des couches T"5 et T"6.

Dans le plan P"2 adjacent au plan P"1, dans les couches externes de fils de trame T"1 et T"7, le tissage est réalisé avec le fil de chaîne C5 (provenant du plan P2) et avec le fil de chaîne C12 (provenant du plan P3) selon une armure de type toile semblable à celle utilisée dans les couches externes T"1 et T"7 dans le plan P"1. Dans le reste du plan P"2, l'armure de tissage est de type multi-satin comme dans le plan P"1 avec le fil de chaîne C2 (provenant du plan P1) liant des fils de trame des couches T"2 et T"3, le fil de chaîne C10 (provenant du plan P3) liant des fils de trame des couches T"3 et T"4, le fil de chaîne C7 (provenant du plan P2) liant des fils de trame des couches T"4 et T"5 et le fil de chaîne C4 (provenant du plan P1) liant les fils de trame des couches T"5 et T"6.

Les figures 6B à 6J montrent les origines des fils de chaîne et leurs parcours pour les plans P"3 à P"10 du premier ensemble de plans P"1 à P"10 et pour les plans P"1 à P"10 du deuxième ensemble de plans P"1 à P"10.

Par définition, dans chaque partie de la structure fibreuse, un plan de chaîne est formé d'un ensemble de fils de chaîne qui s'étend sur l'ensemble des couches de fils de trame dans cette partie.

Par souci de commodité, dans les parties gauches des figures 3A-3J, 4A-4J, 6A-6J, les plans de chaîne différents tels que par exemple les plans P1, P2 de la figure 3A, les plans P1, P2 de la figure 4A ou les plans P1, P2, P3 de la figure 6A sont représentés l'un au-dessus de l'autre alors qu'ils sont l'un derrière l'autre en direction trame, chacun de ces plans étant formé de fils de chaîne qui saisissent des fils des mêmes couches de fils de trame (par exemple, sur la figure 3A, les fils de chaîne C1 à C4 du plan P1 saisissent des fils de trame des couches T1 à T3 et les fils de chaîne C5 à C8 du plan P2 saisissent des fils de trame des mêmes couches T1 à T3).

Bien entendu, différentes armures de tissage multicouches peuvent être utilisées telles que des armures multi-satin avec un pas moyen différent de 5, des armures multi-toile non limitées aux couches externes de fils de trame, des armures multi-sergé et des armures de type interlock. En outre, pour une armure choisie, différentes correspondances pourront être adoptées entre fils de chaîne des plans de chaîne de la première partie de structure fibreuse et fils de chaîne des plans de chaîne de la deuxième partie plus épaisse.

En outre, le passage d'une partie de structure fibreuse 14 de plus forte épaisseur à une partie de structure fibreuse 12 de plus faible épaisseur est réalisé de façon inverse à celle décrite pour le passage d'une partie 12 à une partie 14, à savoir en augmentant le nombre de plans de chaîne et en diminuant de façon correspondante le nombre de couches de fils de chaîne dans les plans de chaîne, le nombre de couches de fils de trame étant aussi diminué. Les fils de chaîne d'un plan de chaîne de la deuxième partie sont répartis entre des plans de chaîne différents de la première partie.

Le mode de tissage décrit ci-avant est particulièrement avantageux en ce qu'il permet de réaliser une structure fibreuse à épaisseur évolutive en direction chaîne tout en conservant un même nombre de fils de chaîne tissés à tout niveau le long de la direction chaîne, le nombre de couches de fils de trame étant adapté au nombre de couches de fils de chaîne. On obtient donc directement la structure fibreuse à épaisseur évolutive sans avoir à procéder à des découpes. Bien entendu, le long de la structure fibreuse en direction chaîne, des variations d'épaisseurs d'amplitudes différentes pourront être réalisées.

La diminution du nombre de plans de chaîne dans une partie 14 de plus grande épaisseur se traduit par une densité en chaîne, dans cette partie 14, inférieure à la densité en chaîne dans une partie 12 de plus petite épaisseur. Si l'on utilise dans les parties 12 et 14 des fils de trame de même titre et de même contexture, la densité moyenne de la structure fibreuse dans une partie 14 est donc plus faible que dans une partie 12. Le titre d'un fil est représenté par sa masse linéique ou le nombre de filaments élémentaires semblables dont il est constitué. La contexture en trame est représentée par la distance entre plans successifs de trame dans la direction chaîne.

Pour éviter une telle variation de densité globale dans la structure fibreuse, on peut réaliser le tissage dans une partie 14 de plus grande épaisseur avec des titres de fils de trame et/ou une contexture en trame plus élevées que dans une partie 12 de plus petite épaisseur, une contexture plus élevée signifiant une diminution de la distance entre plans de trame consécutifs.

La figure 7 montre l'utilisation de fils de trame de titre plus élevé dans une partie 14 que dans une partie 12, un titre plus élevé étant représenté par une section transversale plus grande. Pour plus de clarté, seuls les fils de trame (en section) sont représentés. Le nombre de plans de chaîne étant divisé par deux entre les parties 12 et 14, comme dans l'exemple de la figure 2, on peut utiliser des fils de trame dans la partie 14 ayant un titre doublé par rapport à ceux utilisés dans la partie 12. La variation de titre en trame est inverse de la variation de nombre de plans de chaîne si l'on cherche à compenser au mieux la variation de densité en chaîne. Toutefois, une compensation partielle pourra être adoptée.

La figure 7 montre en outre la possibilité d'adopter une variation progressive du titre des fils de trame dans une zone de transition entre les parties 12 et 14, le titre global dans des plans de trame consécutifs augmentant progressivement. Dans l'exemple illustré, correspondant à l'exemple des figures 3A à 3J, dans la zone de transition entre les parties 12 et 14, le premier plan de trame de la partie 14 est formée de 7 couches de fils de trame t₁ de même titre que les fils de trame t dans la partie 12. Le deuxième plan de trame est formé de 3 couches de fils de trame t₂ de titre supérieur à celui des fils t, par exemple double du titre des fils t₁ et, de chaque côté de ces trois couches, de 2 couches de fils de trame t₁. Les plans de trame suivants dans la partie 14 sont formés de fils de trame t₂. On pourrait adopter une transition plus progressive, éventuellement en utilisant des fils de trame ayant un titre intermédiaire entre ceux des fils t₁ et t₂.

Dans ce qui précède, on a envisagé une variation d'épaisseur de la structure fibreuse dans la direction chaîne.

L'invention est également applicable à la réalisation de structure fibreuse ayant une épaisseur évolutive en direction trame.

La figure 8 montre très schématiquement une telle structure fibreuse 20 tissée 3D avec une partie 22 et une partie 24 ayant, en direction trame, des épaisseurs différentes dans une direction perpendiculaire aux directions chaîne C et trame T.

Dans la partie 24 de plus grande épaisseur, le nombre de couches de fils de chaîne est supérieur à celui des couches de chaîne dans la partie 22 de plus petite épaisseur.

La transition entre la partie 22 et la partie 24 est réalisée en diminuant le nombre de plans de trame et en augmentant le nombre de couches de fils de trame de façon semblable à ce qui a été décrit par exemple plus haut pour une variation d'épaisseur en direction chaîne. Aussi, une description détaillée n'est pas nécessaire.

En outre, pour éviter une trop forte variation de densité globale de la structure fibreuse entre les parties 22 et 24, le titre et/ou la contexture des fils de chaîne dans la partie 24 pourront être choisis supérieurs à ceux des fils de chaîne dans la partie 22.

Bien entendu, en direction trame, plusieurs variations d'épaisseur pourront être réalisées, une diminution d'épaisseur étant effectuée par un processus inverse de celui d'une augmentation d'épaisseur.

## Revendications

1. Procédé de réalisation d'une structure fibreuse (10) par tissage tridimensionnel multicouches, la structure fibreuse ayant une épaisseur, dans une direction perpendiculaire aux directions chaîne (C) et trame (T), qui évolue le long de la direction chaîne tout en conservant un même nombre de fils de chaîne tissés à tout niveau de la structure fibreuse le long de la direction chaîne,
**caractérisé en ce que** lors d'une transition en direction chaîne d'une première partie (12) de la texture fibreuse à une deuxième partie (14) de la texture fibreuse ayant une épaisseur plus grande que celle de la première partie, on diminue le nombre de plans de chaîne et on augmente le nombre de couches de fils de chaîne sans changer le nombre de fils de chaîne, en constituant au moins un plan de chaîne (P'1 ; P"1, P"2) dans la deuxième partie avec des fils de chaîne issus d'au moins deux plans de chaîne différents (P1, P2 ; P1, P2, P3) dans la première partie, lesdits au moins deux plans de chaîne différents étant situés l'un derrière l'autre en direction trame.

2. Procédé de réalisation d'une structure fibreuse (10) par tissage tridimensionnel multicouches, la structure fibreuse ayant une épaisseur, dans une direction perpendiculaire aux directions chaîne (C) et trame (T), qui évolue le long de la direction chaîne tout en conservant un même nombre de fils de chaîne tissés à tout niveau de la structure fibreuse le long de la direction chaîne,
**caractérisé en ce que** lors d'une transition en direction chaîne d'une deuxième partie (14) de la texture fibreuse à une première partie (12) de la texture fibreuse ayant une épaisseur plus petite que celle de la deuxième partie, on augmente le nombre de plans de chaîne et on diminue le nombre de couches de fils de chaîne sans changer le nombre de fils de chaîne, en répartissant les fils de chaîne d'au moins un plan de chaîne (P'1 ; P"1, P"2) de la deuxième partie entre au moins deux plans de chaîne différents (P1, P2 ; P1, P2, P3) de la première partie, lesdits au moins deux plans de chaîne différents étant situés l'un derrière l'autre en direction trame.

3. Procédé selon l'une quelconque des revendications 1 et 2, **caractérisé en ce que**, pour le tissage dans la deuxième partie (14), on utilise des fils de trame (t₂) dont au moins une partie a un titre et/ou une contexture supérieurs à ceux des fils de trame (t₁) utilisés pour le tissage dans la première partie (12).

4. Procédé selon la revendication 3, **caractérisé en ce que** l'on réalise une transition entre lesdites deux parties (12, 14) de la structure fibreuse en faisant varier progressivement le titre global des fils de trame (t, t₁, t₂) dans des plans de trame successifs.

5. Procédé selon l'une quelconque des revendications 1 à 4, **caractérisé en ce que** qu'un plan de chaîne (P'1) de la deuxième partie (14) comprend l'ensemble des fils de chaîne de deux plans de chaîne voisins (P1, P2) de la première partie (12).

6. Procédé selon l'une quelconque des revendications 1 à 4, **caractérisé en ce que** deux plans de chaîne voisins (P"1, P"2) de la deuxième partie (14) comprennent des fils de chaîne de trois plans de chaîne voisins (P1, P2, P3) de la première partie (12).

7. Procédé de réalisation d'une structure fibreuse (20) par tissage tridimensionnel multicouches, la structure fibreuse ayant une épaisseur, dans une direction perpendiculaire aux directions chaîne (C) et trame (T), qui évolue le long de la direction trame tout en conservant un même nombre de fils de trame tissés à tout niveau de la structure fibreuse le long de la direction trame,
**caractérisé en ce que** lors d'une transition en direction trame d'une première partie (22) de la texture fibreuse à une deuxième partie (24) de la texture fibreuse ayant une épaisseur plus grande que celle de la première partie, on diminue le nombre de plans de trame et on augmente le nombre de couches de fils de trame sans changer le nombre de fils de trame, en constituant au moins un plan de trame de la deuxième partie avec des fils de trame issus d'au moins deux plans de trame différents de la première partie, lesdits au moins deux plans de trame différents étant situés l'un derrière l'autre en direction trame.

8. Procédé de réalisation d'une structure fibreuse (20) par tissage tridimensionnel multicouches, la structure fibreuse ayant une épaisseur, dans une direction perpendiculaire aux directions chaîne et trame, qui évolue le long de la direction trame tout en conservant un même nombre de fils de trame tissés à tout niveau de la structure fibreuse le long de la direction trame,
**caractérisé en ce que** lors d'une transition en direction trame d'une deuxième partie (24) de la texture fibreuse à une première partie (22) de la texture fibreuse ayant une épaisseur plus petite que celle de la deuxième partie, on augmente le nombre de plans de trame et on diminue le nombre de couches de fils de trame sans changer le nombre de fils de trame, en répartissant les fils de trame d'au moins un plan de trame de la deuxième partie entre au moins deux plans de trame différents de la première partie, lesdits au moins deux plans de trame différents étant situés l'un derrière l'autre en direction chaîne.

9. Procédé selon l'une quelconque des revendications 7 et 8, **caractérisé en ce que**, pour le tissage dans la deuxième partie, on utilise des fils de chaîne dont au moins une partie a un titre et/ou une contexture supérieurs à ceux des fils de chaîne utilisés pour le tissage dans la première partie.

10. Procédé selon la revendication 9, **caractérisé en ce que** l'on réalise une transition entre lesdites deux parties de la structure fibreuse en faisant varier progressivement le titre global des fils de chaîne dans des plans de chaîne successifs.

11. Procédé selon l'une quelconque des revendications 7 à 10, **caractérisé en ce qu'**un plan de trame de la deuxième partie comprend l'ensemble des fils de trame de deux plans de trame voisins de la première partie.

12. Procédé selon l'une quelconque des revendications 7 à 10, **caractérisé en ce que** deux plans de trame voisins de la deuxième partie comprennent des fils de trame de trois plans de trame voisins de la première partie.

## Patentansprüche

1. Verfahren zur Herstellung eines Fasergebildes (10) durch dreidimensionales mehrschichtiges Weben, wobei das Fasergebilde eine Dicke in einer Richtung senkrecht zur Kettrichtung (C) und zur Schussrichtung (T) aufweist, die sich entlang der Kettrichtung verändert, während eine gleichbleibende Anzahl von gewebten Kettfäden auf jeder Ebene des Fasergebildes entlang der Kettrichtung erhalten bleibt,
**dadurch gekennzeichnet, dass** während eines Übergangs in Kettrichtung von einem ersten Abschnitt (12) der faserigen Textur zu einem zweiten Abschnitt (14) der faserigen Textur, der eine größere Dicke als der erste Abschnitt aufweist, die Anzahl der Kettebenen reduziert und die Anzahl der Schichten von Kettfäden erhöht wird, ohne die Anzahl der Kettfäden zu ändern, indem mindestens eine Kettebene (P'1; P"1, P"2) im zweiten Abschnitt mit Kettfäden aus mindestens zwei verschiedenen Kettebenen (P1, P2; P1, P2, P3) im ersten Abschnitt gebildet wird, wobei die mindestens zwei verschiedenen Kettebenen in Schussrichtung hintereinander angeordnet sind.

2. Verfahren zur Herstellung eines Fasergebildes (10) durch dreidimensionales mehrschichtiges Weben, wobei das Fasergebilde eine Dicke in einer Richtung senkrecht zur Kettrichtung (C) und zur Schussrichtung (T) aufweist, die sich entlang der Kettrichtung verändert, während eine gleichbleibende Anzahl von gewebten Kettfäden auf jeder Ebene des Fasergebildes entlang der Kettrichtung erhalten bleibt,
**dadurch gekennzeichnet, dass** während eines Übergangs in Kettrichtung von einem zweiten Abschnitt (14) der faserigen Textur zu einem ersten Abschnitt (12) der faserigen Textur, der eine geringere Dicke als der zweite Abschnitt aufweist, die Anzahl der Kettebenen reduziert und die Anzahl der Schichten von Kettfäden verringert wird, ohne die Anzahl der Kettfäden zu ändern, indem die Kettfäden von mindestens einer Kettebene (P'1; P"1, P"2) des zweiten Abschnitts zwischen mindestens zwei verschiedenen Kettebenen (P1, P2; P1, P2, P3) des ersten Abschnitts verteilt werden, wobei die mindestens zwei verschiedenen Kettebenen in Schussrichtung hintereinander angeordnet sind.

3. Verfahren nach einem der Ansprüche 1 und 2, **dadurch gekennzeichnet, dass** zum Weben im zweiten Abschnitt (14) Schussfäden (t₂) verwendet werden, von denen mindestens ein Teil einen Titer und/oder eine Fadenzahl aufweist, der/die größer ist/sind als der/die der zum Weben im ersten Abschnitt (12) verwendeten Schussfäden (t₁).

4. Verfahren nach Anspruch 3, **dadurch gekennzeichnet, dass** ein Übergang zwischen den beiden Abschnitten (12, 14) des Fasergebildes gebildet wird, indem der Gesamttiter der Schussfäden (t, t₁, t₂) in aufeinanderfolgenden Schussebenen schrittweise verändert wird.

5. Verfahren nach einem der Ansprüche 1 bis 4, **dadurch gekennzeichnet, dass** eine Kettenebene (P'1) des zweiten Abschnitts (14) alle Kettfäden von zwei benachbarten Kettenebenen (P1, P2) des ersten Abschnitts (12) umfasst.

6. Verfahren nach einem der Ansprüche 1 bis 4, **dadurch gekennzeichnet, dass** zwei benachbarte Kettenebenen (P"1, P"2) des zweiten Abschnitts (14) Kettfäden von drei benachbarten Kettenebenen (P1, P2, P3) des ersten Abschnitts (12) umfasst.

7. Verfahren zur Herstellung eines Fasergebildes (20) durch dreidimensionales mehrschichtiges Weben, wobei das Fasergebilde eine Dicke in einer Richtung senkrecht zur Kettrichtung (C) und zur Schussrichtung (T) aufweist, die sich entlang der Schussrichtung verändert, während eine gleichbleibende Anzahl von gewebten Schussfäden auf jeder Ebene des Fasergebildes entlang der Schussrichtung erhalten bleibt,
**dadurch gekennzeichnet, dass** während eines Übergangs in Schussrichtung von einem ersten Abschnitt (22) der faserigen Textur zu einem zweiten Abschnitt (24) der faserigen Textur, der eine größere Dicke als der erste Abschnitt aufweist, die Anzahl der Schussebenen reduziert und die Anzahl der Schichten von Schussfäden erhöht wird, ohne die Anzahl der Schussfäden zu ändern, indem mindestens eine Schussebene des zweiten Abschnitts mit Schussfäden aus mindestens zwei verschiedenen Schussebenen des ersten Abschnitts gebildet wird, wobei die mindestens zwei verschiedenen Schussebenen in Schussrichtung hintereinander angeordnet sind.

8. Verfahren zur Herstellung eines Fasergebildes (20) durch dreidimensionales mehrschichtiges Weben, wobei das Fasergebilde eine Dicke in einer Richtung senkrecht zur Kettrichtung und zur Schussrichtung aufweist, die sich entlang der Schussrichtung verändert, während eine gleichbleibende Anzahl von gewebten Schussfäden auf jeder Ebene des Fasergebildes entlang der Schussrichtung erhalten bleibt,
**dadurch gekennzeichnet, dass** während eines Übergangs in Schussrichtung von einem zweiten Abschnitt (24) der faserigen Textur zu einem ersten Abschnitt (22) der faserigen Textur, der eine geringere Dicke als der zweite Abschnitt aufweist, die Anzahl der Schussebenen erhöht und die Anzahl der Schichten von Schussfäden verringert wird, ohne die Anzahl der Schussfäden zu ändern, indem die Schussfäden von mindestens einer Schussebene des zweiten Abschnitts zwischen mindestens zwei verschiedenen Schussebenen des ersten Abschnitts verteilt werden, wobei die mindestens zwei verschiedenen Schussebenen in Kettrichtung hintereinander angeordnet sind.

9. Verfahren nach einem der Ansprüche 7 und 8, **dadurch gekennzeichnet, dass** zum Weben im zweiten Abschnitt Kettfäden verwendet werden, von denen mindestens ein Teil einen Titer und/oder eine Fadenzahl aufweist, der/die größer ist/sind als der/die der zum Weben im ersten Abschnitt verwendeten Kettfäden.

10. Verfahren nach Anspruch 9, **dadurch gekennzeichnet, dass** ein Übergang zwischen den beiden Abschnitten des Fasergebildes gebildet wird, indem der Gesamttiter der Kettfäden in aufeinanderfolgenden Kettenebenen schrittweise verändert wird.

11. Verfahren nach einem der Ansprüche 7 bis 10, **dadurch gekennzeichnet, dass** eine Schussebene des zweiten Abschnitts alle Schussfäden von zwei benachbarten Schussebenen des ersten Abschnitts umfasst.

12. Verfahren nach einem der Ansprüche 7 bis 10, **dadurch gekennzeichnet, dass** zwei benachbarte Schussebenen des zweiten Abschnitts Schussfäden von drei benachbarten Schussebenen des ersten Abschnitts umfassen.

## Claims

1. A method of making a fiber structure (10) by multilayer three-dimensional weaving, the fiber structure having a thickness in a direction perpendicular to the warp (C) and weft (T) directions that varies along the warp direction while conserving the same number of warp yarns that are woven at all points of the fiber structure along the warp direction,
the method being **characterized in that** during a transition in the warp direction from a first portion (12) of the fiber texture to a second portion (14) of the fiber texture having a thickness that is greater than the thickness of the first portion, the number of warp planes is decreased and the number of layers of warp yarns is increased without changing the number of warp yarns, by constituting at least one warp plane (P'1; P"1, P"2) in the second portion with warp yarns taken from at least two different warp planes (P1, P2; P1, P2, P3) in the first portion, said at least two different warp planes being located one behind the other in the weft direction.

2. A method of making a fiber structure (10) by multilayer three-dimensional weaving, the fiber structure having a thickness in a direction perpendicular to the warp (C) and weft (T) directions that varies along the warp direction while conserving the same number of warp yarns that are woven at all points of the fiber structure along the warp direction,
the method being **characterized in that** during a transition in the warp direction from a second portion (14) of the fiber texture to a first portion (12) of the fiber texture having a thickness that is smaller than the thickness of the second portion, the number of warp planes is increased and the number of layers of warp yarns is decreased without changing the number of warp yarns, by sharing the warp yarns of at least one warp plane (P'1; P"1, P"2) of the second portion between at least two different warp planes (P1, P2; P1, P2, P3) of the first portion, said at least two different warp planes being located one behind the other in the weft direction.

3. A method according to claim 1 or claim 2,
**characterized in that**, for weaving in the second portion (14), weft yarns (t₂) are used, at least some of which present a size and/or a structure that is/are greater than the size and/or structure of the weft yarns (t₁) used for weaving in the first portion (12).

4. A method according to claim 3, **characterized in that** a transition between said two portions (12, 14) of the fiber structure is made by progressively varying the overall size of the weft yarns (t, t₁, t₂) in successive weft planes.

5. A method according to any one of claims 1 to 4, **characterized in that** a warp plane (P'1) of the second portion (14) contains all of the warp yarns of two adjacent warp planes (P1, P2) of the first portion (12).

6. A method according to any one of claims 1 to 4, **characterized in that** two adjacent warp planes (P"1, P"2) of the second portion (14) comprise the warp yarns of three adjacent warp planes (P1, P2, P3) of the first portion (12).

7. A method of making a fiber structure (20) by multilayer three-dimensional weaving, the fiber structure having a thickness in a direction perpendicular to the warp (C) and weft (T) directions that varies along the weft direction while conserving the same number of weft yarns that are woven at all points of the fiber structure along the weft direction,
the method being **characterized in that** during a transition in the weft direction from a first portion (22) of the fiber texture to a second portion (24) of the fiber texture having a thickness that is greater than the thickness of the first portion, the number of weft planes is decreased and the number of layers of weft yarns is increased without changing the number of weft yarns, by constituting at least one weft plane in the second portion with weft yarns taken from at least two different weft planes in the first portion, said at least two different weft planes being located one behind the other in the weft direction.

8. A method of making a fiber structure by multilayer three-dimensional weaving, the fiber structure having a thickness in a direction perpendicular to the warp and weft directions that varies along the weft direction while conserving the same number of weft yarns that are woven at all points of the fiber structure along the weft direction,
the method being **characterized in that** during a transition in the weft direction from a second portion of the fiber texture to a first portion of the fiber texture having a thickness that is smaller than the thickness of the second portion, the number of weft planes is increased and the number of layers of weft yarns is decreased without changing the number of weft yarns, by sharing the weft yarns of at least one weft plane of the second portion between at least two different weft planes of the first portion, said at least two different weft planes being located one behind the other in the warp direction.

9. A method according to claim 7 or claim 8, **characterized in that**, for weaving in the second portion, warp yarns are used, at least some of which present a size and/or a structure that is/are greater than the size and/or structure of the warp yarns used for weaving in the first portion.

10. A method according to claim 9, **characterized in that** a transition between said two portions of the fiber structure is made by progressively varying the overall size of the warp yarns in successive warp planes.

11. A method according to any one of claims 7 to 10, **characterized in that** a weft plane of the second portion contains all of the weft yarns of two adjacent weft planes of the first portion.

12. A method according to any one of claims 7 to 10, **characterized in that** two adjacent weft planes of the second portion comprise the weft yarns of three adjacent weft planes of the first portion.
